# EUROPEAN PATENT APPLICATION

(11) **EP 0 844 258 A1**
(43) Date of publication of application: **27.05.1998**
(21) Application number: 96118843.0
(22) Date of filing: 25.11.1996
(51) Int. Cl.: C08F 10/00, C08L 23/04

(54) **Polyethylene compositions for film applications**

(71) Applicant: FINA RESEARCH S.A., B-7181 Seneffe (Feluy) (BE)
(72) Inventor: Dewart, Jean-Christophe, 1082 Berchem-St-Agathe (BE); Everaert, Jacques, 3001 Heverlee (BE)

(57) **Abstract**

A homogeneous composition of a low density polyethylene (LDPE) and/or a linear low density polyethylene (LLDPE) with a medium density polyethylene obtained using a metallocene catalyst with a cocatalyst (mMDPE), this composition essentially consisting of from 0.5 to 85 % by weight of mMDPE and from 15 to 99.5 % by weight of LDPE and/or LLDPE.

The compositions of this invention have good processability and are used to make films, particularly blown films; which have good optical and mechanical properties.

## Description

The present invention relates to a polyethylene composition having greatly improved optical properties, good mechanical properties and good processability, in order to be used as food or non food packaging, personal care products, agricultural or industrial products.

Low density polyethylene (LDPE) and linear low density polyethylene (LLDPE) offer good optical properties but poor mechanical properties. Conventional medium density polyethylene (MDPE) offers poor optical properties but good mechanical properties. The mixtures of conventional MDPE with LDPE and/or LLDPE obtained so far on the market have not been able to satisfy the demand for simultaneous optical and mechanical properties, as well as good processability.

Therefore, there exists a need for polyethylene compositions that will maintain the transparency and shine offered by LDPE and the mechanical properties of conventional MDPE such as toughness, rigidity while keeping a good resistance to tear and a good processability.

It is therefore an object of the present invention to provide polyethylene compositions with improved shine and transparency.
It is another object of the present invention to provide polyethylene compositions with improved rigidity.
It is a further object of the present invention to provide polyethylene compositions with improved toughness.
It is yet another object of the present invention to provide polyethylene compositions with improved welding properties.
It is yet a further object of the present invention to provide polyethylene compositions with improved resistance to tear.
It is also an object of the present invention to provide polyethylene compositions with improved processability.

### Description of the invention

This invention is a homogeneous composition of a low density polyethylene (LDPE) and/or a linear low density polyethylene (LLDPE) with a medium density polyethylene (MDPE), the latter being obtained by using a metallocene catalyst, bridged or unbridged, supported or not supported, with an alumoxane or any other ionizing agent as cocatalyst, said composition consisting of from 0.5 to 85 % by weight of metallocene catalyzed medium density polyehtylene (mMDPE) and from 15 to 99.5 % by weight of LDPE and/or LLDPE. The compositions of this invention have good processability and are used to make films, particularly blown films, which have good optical and mechanical properties.

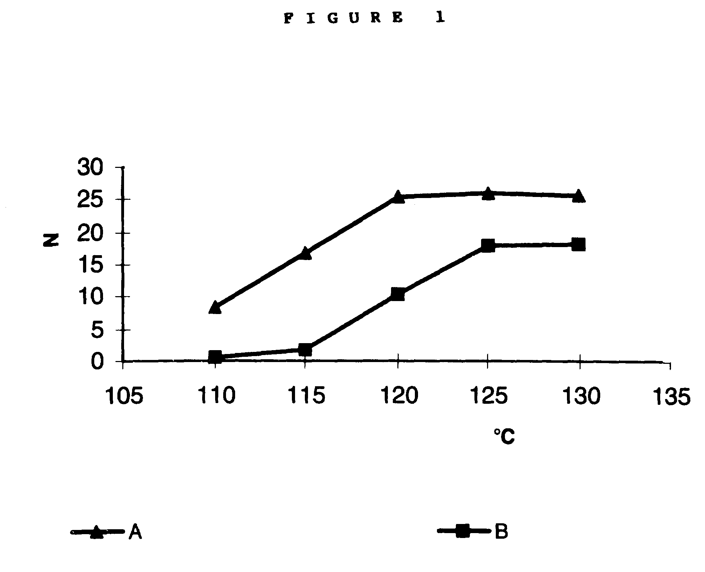

Figure 1 represents the improved welding properties of this invention.

When metallocene catalyzed medium density polyethylenes (mMDPE) are used in compositions with low density and/or linear low density polyethylenes (LDPE and/or LLDPE), we have now surprisingly found that low density grade films can be obtained under extrusion conditions of LDPE, with optical performances comparable to LLDPE and elongational deformation capabilities of chromium-catalyzed MDPE. Medium density grades with a processing performance similar to that of a conventional MDPE, but with improved optical properties, possibly combined with a higher melt index, represent a major advantage for these metallocene catalyzed resins.

### Low density and linear low density polyethylenes.

The definition of each of these two polyethylenes is found for example in "Encyclopedia of Polymer Science and Engineering", second edition, Volume 6, 1986, on pages 386 to 389 (LDPE) and on pages 429 to 435 (LLDPE). The manufacture of low density and linear low density polyethylenes is known in the art and is described in the same reference on pages 404 to 410 (LDPE)and pages 436 to 444 (LLDPE).

### Metallocene catalyzed medium density polyethylenes.

Any metallocene in the art known as suitable for the polymerization of olefins can be used to produce the mMDPE of the present invention.

The preferred metallocenes are described in EP Application n^{o} 96200422.9. They can be represented by the general formulae:

(Cp)ₘ MRₙX_{q} I.

wherein Cp is a cyclopentadienyl ring, M is a Group 4b, 5b or 6b transition metal, R is a hydrocarbyl group or hydrocarboxy having from 1 to 20 carbon atoms, X is a halogen, and m = 1-3, n = 0-3, q = 0-3 and the sum of m+n+q will be equal to the oxidation state of the metal.

(C₅R'ₖ)_{g}R''ₛ(C₅R'ₖ)MQ_{3-g} II.

and

R''ₛ(C₅R'ₖ)₂MQ' III.

wherein (C₅R'ₖ) is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring, R'' is a C₁-C₄ alkylene radical, a dialkyl germanium or silicon or siloxane, or a alkyl phosphine or amine radical bridging two (C₅R'ₖ) rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

Exemplary hydrocarbyl radicals are methyl, ethyl, propyl, butyl, amyl, isoamyl, hexyl, isobutyl, heptyl, octyl, nonyl, decyl, cetyl, 2-ethylhexyl, phenyl and the like.
Exemplary halogen atoms include chlorine, bromine, fluorine and iodine and of these halogen atoms, chlorine is preferred.
Exemplary hydrocarboxy radicals are methoxy, ethoxy, propoxy, butoxy, amyloxy and the like.
Exemplary of the alkylidene radicals are methylidene, ethylidene and propylidene.

Among the preferred metallocenes used in the present invention, one can cite : bis cyclopentadienyl n-butylidene zirconium dichloride, bisindenyl ethane zirconium dichloride and mixtures thereof.

The metallocene may be supported. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalized polyolefins such as finely divided polyethylene. Preferably, the support is a silica having a surface area comprised between 200 and 600 m²/g and a pore volume comprised between 0.5 and 3 ml/g.

An active site must be created by adding a cocatalyst having an ionizing action.While alumoxane can be used as cocatalyst, it is not necessary to use alumoxane as cocatalyst during the polymerization procedure for preparing medium density polyethylene according to the process of the present invention.

When alumoxane is used as a cocatalyst, any alumoxane known in the art can be used in the present invention.

The preferred alumoxanes comprise oligomeric linear and/or cyclic alkyl alumoxanes represented by the formula : 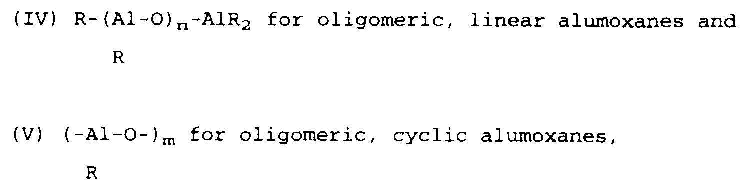 wherein n is 1-40, preferably 10-20, m is 3-40, preferably 3-20 and R is a C₁-C₈ alkyl group and preferably methyl. Generally, in the preparation of alumoxanes from, for example, trimethyl aluminum and water, a mixture of linear and cyclic compounds is obtained.

Methylalumoxane is preferably used.

The alumoxane is usually delivered as a concentrated solution of alumoxane in toluene.

When alumoxane is not used as a cocatalyst, according to a preferred embodiment of the present invention, one or more aluminiumalkyl represented by the formula AlRₓ are used wherein each R is the same or different and is selected from halides or from alkoxy or alkyl groups having from 1 to 12 carbon atoms and x is from 1 to 3. Especially suitable aluminiumalkyl are trialkylaluminium selected from trimethylaluminium, triethylaluminium, triisobutylaluminium, tri-n-octylaluminium or tri-n-hexylaluminium, the most preferred being triisobutylaluminium (TIBAL).

The amount of alumoxane or aluminiumalkyl and metallocene usefully employed in the preparation of the solid support catalyst can vary over a wide range. Preferably, the aluminium to transition metal mole ratio is comprised between 1:1 and 100:1, preferably between 5:1 and 50:1.

The metallocene catalyst utilized to produce the medium density polyethylene required by the present invention can be used in gas, solution or slurry polymerizations. Preferably, in the present invention, the polymerization process is conducted under slurry phase polymerization conditions. It is preferred that the slurry phase polymerization conditions comprise a temperature of about 20 to about 125°C, (preferably of 60 to 95°C) and a pressure of about 0.1 to about 5.6 MPa, (preferably from 2 to 4 MPa) for a time between 10 minutes and 4 hours, (preferably between 1 and 2.5 hours).

It is preferred that the polymerization reaction be run in a diluent at a temperature at which the polymer remains as a suspended solid in the diluent. Diluents include, for examples, isobutane, n-hexane, n-heptane, methylcyclohexane, n-pentane, n-butane, n-decane, cyclohexane and the like. The preferred diluent is isobutane.

According to a preferred embodiment of the present invention, a continuous reactor is used for conducting the polymerization. This continuous reactor is preferably a loop reactor. During the polymerization process, at least one monomer, the catalytic system and a diluent are flowed in admixture through the reactor.

In the present invention average molecular weights can be controlled by the introduction of some amount of hydrogen during polymerization.When hydrogen is used it is preferred that the relative amounts of hydrogen and olefin introduced into the polymerization reactor be within the range of about 0.001 to 15 mole percent hydrogen and 99.999 to 85 mole percent olefin based on total hydrogen and olefin present, preferably about 0.2 to 3 mole percent hydrogen and 99.8 to 97 mole percent olefin.

The densities of the metallocene catalyzed polyethylenes (mMDPE) used in the present invention are regulated by the amount of comonomer injected in the reactor; they will range from 0.925 g/cm³ to 0.945 g/cm³ and preferably from 0.930 g/cm³ to 0.94 g/cm³. Examples of comonomer which can be used include 1-olefins butene, hexene, octene, 4-methyl-pentene, and the like, the most preferred being hexene.

The melt indices of the metallocene catalyzed polyethylene (mMDPE) used in the present invention can be regulated by the amount of hydrogen injected in the reactor; they will range from 0.05 g/10′ to 5 g/10′, preferably from 0.1 g/10′ to 3 g/10′ and most preferably from 1.6 g/10′ to 2.5 g/10′.

Research has been conducted on metallocene catalysts leading to a very wide range of polyethylene products with both narrow and broad molecular weight distribution (MWD).

In changing the MWD, resins are obtained with largely different viscous behavior. The shear response (SR) sensitivity is commonly expressed by the ratio of melt flows (ASTM D-1238-89A at 190°C) with loads of 21.6 kg (HLMI) and 2.16 kg (MI2). Resins with a narrow MWD have typical SR values of about 15. The resins produced have values going from the typical low values of about 15 for unmodified narrow MWD resins to values ranging from about 50 to about 60 for resins with MI2-values of 1 g/10′ and higher, and values ranging from about 150 to about 200 for resins with the lowest MI2.

Standard additives are used for both long term and processing stabilization and if desired, a dye can also be added.

### Compositions of mMDPE with LDPE and/or LLDPE.

The mMDPE catalyzed by the procedure described hereabove are then mixed with LDPE and/or LLDPE in various ratios.

According to embodiments of the present invention, compositions of LDPE and/or LLDPE with mMDPE are obtained either by preliminary dry blend or by direct blend in the hopper or via the extruder.

Materials are run under production conditions for existing commercial applications where processability, downgauging and good optics are key issues. Excellent outputs are achieved.

Generally, the composition of the present invention comprises from about 0.5 to 85% by weight of mMDPE and from 15 to 99.5% by weight of LDPE and/or LLDPE. Preferably the composition of the present invention comprises from 4.5 to 80 % by weight of mMDPE and from 20 to 95.5% by weight of LDPE and/or LLDPE and most preferably, the composition of the present invention comprises from 25 to 65% by weight of mMDPE and from 35 to 75% by weight of LDPE and/or LLDPE.

It is surprisingly observed that excellent transparency and shine are obtained for all the compositions tested in the above mentioned ranges.

It is also observed that the mechanical properties of the compositions are comparable to those of the conventional MDPE and do not present any of the drawbacks observed in mixtures with low density polyethylenes (LDPE or LLDPE).

Particularly, the rigidity of the mixture is improved with respect to that of the LDPE; this will allow a reduction in film thickness. For a classic LDPE with a MI2 of 0.3 g/10′ it is impossible to obtain a film thickness inferior to 50 µm. The thickness can be drastically reduced when the LDPE is blended with a metallocene catalyzed medium density polyethylene.

The drawability of the mixture, which is the minimum drawdown in industrial processing conditions can be summarized in table I for the blend of a mMDPE characterized by a density of 0.932 g/cm³ and a melt index MI2 of 0.2 g/10′ with a LDPE characterized by a density of 0.922 g/cm³ and a melt index MI2 of 0.3 g/10′.

**TABLE I**

| Weight% mMDPE | film thickness |
|---|---|
| 0 | 50 µm |
| 12.5 | 25 |
| 25 | 15 |
| 100 | 6 |

It must be noted that in the case of a LDPE of melt index MI2=2 g/10′ it is technically possible to decrease the film thickness below 50 µm but the mechanical properties will be totally inadequate. According to the present invention, the film thickness can be decreased while keeping excellent mechanical properties.

Other novel and appreciable properties of the blend of this invention are a decrease of the welding temperature with respect to a conventional MDPE of same density and melt index and an increase in welding strength with respect to LDPE.

This behavior is exhibited in figure 1 which represents the welding strength expressed in Newtons in the y-direction as a function of sealing temperature expressed in Degrees Centigrade in the x-direction for a mixture including 20% by weight of mMDPE characterized by a density of 0.932 g/cm³ and a melt index MI2 of 0.2 g/10′ and 80% by weight of a LDPE characterized by a density of 0.924 g/cm³ and a melt index MI2 of 0.7 g/10′ (curve A).

The reference curve (curve B) is a composition wherein the 20% of mMDPE have been replaced by LLDPE characterized by a density of 0.928 g/cm³ and a melt index MI2 of 1 g/10′.

This figure clearly shows the decrease in welding temperature for a material of comparable welding strength.

It is another advantage of the present mixture that in comparison with conventional MDPE of same density and melt index, the slow puncture resistance of mMDPE is substantially higher in yield stress, stress at break and tensile elongation. The same observation is achieved in tensile testing for both machine and transverse directions of the film.

From the multiple trials we have run, one can describe the global "processability" picture of mMDPE as follows :
- drawability down to 6 µm
- excellent bubble stability
- downgauging possibilities of LDPE and stabilization of the bubble at high output.
- no loss of output in comparison with the best LLDPE's, at facilities used to run LLDPE; in the worst cases (LDPE screws), a loss of maximum 10% output is largely compensated by downgauging - processing parameters (pressure, torque, temperatures) in line with conventional resins.

No processing additive was required nor used in all related experiences.

It is seen that the compositions including mMDPE can be run on a cast line without showing the "draw resonance" effect.

In the compositions of this invention, it is thus observed that mMDPE gives clarity, balanced tear properties, toughness while maintaining the standard downgauging possibilities (stiffness) and good processability of conventional MDPE.

### EXAMPLES

### 1. Polymerization procedure

The polymerization of the metallocene catalyzed medium density polyethylene was carried out slurry in a liquid full loop reactor. Ethylene was injected with 1-hexene together with the catalyst. Isobutane is used as diluent. The polymerization conditions are indicated in Table II, and the polyethylene properties are indicated in Table III.

**TABLE II**

| Resin | Resin R1 | Resin R2 |
|---|---|---|
| C2 feed (kg/hr) | 7.5 | 7.5 |
| C6 feed (g/kg C2) | 45 | 40 |
| H2 feed (mg/hr) | none | 50 |
| iso C4 feed (kg/hr) | 7.8 | 8.1 |
| Tibal conc (ppm) | 250 | 250 |
| Tpol (°C) | 85 | 85 |
| C2 = ethylene C6 = 1-hexene iC4 = isobutane TiBAL = triisobutylaluminium | | |

**TABLE III**

| resin | Resin R1 | Resin R2 |
|---|---|---|
| catalyst | Cat 1 | Cat 2 |
| density (g/cc) | 0.932 | 0.932 |
| MI2 pellets (g/10′) | 0.27 | 2.5 |
| HLMI pellets (g/10′) | 11 | 50 |
| SR2 pellets | 41 | 20 |
| Bulk density (ASTM-D-1895) MI2 = Melt Index (ASTM-D-1238-89A) measured at a temperature of 190°C and a load of 2.16 kg HLMI = High Load Melt Index (ASTM-D-1238-89A) measured at a temperature of 190°C and under a load of 21.6 kg. Cat 2 : bis cyclopentadienyl n-butylidene zirconium dichloride Cat 1 : 50% bis indenyl ethane zirconium dichloride, 50% Cat 2 Both catalysts are supported on MAO-treated silica. | | |

The haze, gloss, machine direction tear and transverse direction tear are given in table IV for several mMDPE/LDPE compositions obtained either by dry blending of the ingredients in the case of high melt flow index (MI2>2 g/10′) or by extrusion in the case of low melt flow index (MI2<0.7 g/10′), together with 2000 ppm of standard antioxidant mixture in isododecane, and followed by film production on conventional blown film equipment.

The gloss was measured with the Byk-Gardner micro-gloss reflectometer; the haze was measured with the Byk-Gardner Hazegard® system; the tear resistance was measured with the Elmerdorf Test, in the machine direction (MD) and in the transverse direction (TD)
In table IV, the numbers in parentheses characterizing the low density polyethylenes are respectively the density expressed in g/cm³ and the melt flow index MI2 expressed in g/10′. The conventional medium density polyethylenes used in the comparative examples have been obtained using the Phillips procedure with a chromium catalyst and hexene as comonomer; their density is 0.932 g/cm³ and the melt flow indices are respectively 0.27, 2.5 and 0.27 g/10′.

**TABLE IV**

| | Pure LDPE | LDPE/MDPE | LDPE/mMDPE |
|---|---|---|---|
| | | 20% LDPE (0.924-0.7) | |

| | | 80% MDPE | 80% Resin R1 |
|---|---|---|---|
| Haze | 10% | 65% | 30% |
| Gloss | 50% | 15% | 30% |
| Tear N/mm MD | 31 | 21 | 34 |
| TD | 60 | 74 | 65 |
| | | 25% LDPE (0.922-2.0) | |

| | | 75% MDPE | 75% Resin R2 |
|---|---|---|---|
| Haze | 8% | 60% | 12% |
| Gloss | 80% | 20% | 80% |
| Tear N/mm MD | 25 | 15 | 54 |
| TD | 40 | 108 | 88 |
| | | 75% LDPE (0.922-0.3) | |

| | | 25% MDPE | 25% Resin R1 |
|---|---|---|---|
| Haze | 13% | 25% | 17% |
| Gloss | 45% | 30% | 40% |
| Tear N/mm MD | 16 | 12 | 15 |
| TD | 30 | 52 | 40 |

## Claims

1. A homogeneous composition of a low density polyethylene (LDPE) and/or a linear low density polyethylene (LLDPE) with a medium density polyethylene obtained using a metallocene catalyst with a cocatalyst (mMDPE), this composition essentially consisting of from 0.5 to 85 % by weight of mMDPE and from 15 to 99.5 % by weight of LDPE and/or LLDPE.

2. The composition of claim 1 essentially consisting of from 4.5 to 80% by weight of mMDPE and from 20 to 95.5% by weight of LDPE and/or LLDPE.

3. The composition of either of claims 1 and 2 essentially consisting of from 25 to 65% by weight of mMDPE and from 35 to 75% by weight of LDPE and/or LLDPE.

4. Use of metallocene-catalyzed medium density polyethylene (mMDPE) in a homogeneous composition of a low density polyethylene and/or a linear low density polyethylene with a medium density polyethylene, this composition having from 0.5 to 85 % by weight of mMDPE and from 15 to 99.5 % by weight of LDPE and/or LLDPE.

5. The use of claim 4 where the composition essentially consists of from 4.5 to 80% by weight of mMDPE and from 20 to 95.5% by weight of LDPE and/or LLDPE.

6. The use of either of claims 4 and 5 wherein the composition essentially consists of from 25 to 65% by weight of mMDPE and from 35 to 75% by weight of LDPE and/or LLDPE.
